# EUROPÄISCHE PATENTSCHRIFT

(11) **EP 4 745 272 B1**
(45) Veröffentlichungstag und Bekanntmachung des Hinweises auf die Patenterteilung: **14.10.2026**
(21) Anmeldenummer: 24212671.2
(22) Anmeldetag: 13.11.2024
(51) Int. Cl.: H01B 17/26, H01M 8/2475, C25B 9/65, C25B 1/04

(54) **ELEKTRISCHE DURCHFÜHRUNGSANORDNUNG FÜR BRENNSTOFF- UND/ODER ELEKTROLYSEZELLENANORDNUNG**
BUSHING ARRANGEMENT AND FUEL AND/OR ELECTROLYSIS CELL ASSEMBLY
DISPOSITIF DE TRAVERSÉE ÉLECTRIQUE POUR AGENCEMENT DE PILES À COMBUSTIBLE ET/OU D'ÉLECTROLYSE

(43) Veröffentlichungstag der Anmeldung: 20.05.2026
(73) Patentinhaber: Sunfire SE, 01237 Dresden (DE)
(72) Erfinder: Klahn, Christian, 03238 Finsterwalde (DE); Brettschneider, Eric, 01307 Dresden (DE)
(74) Vertreter: Epping - Hermann - Fischer

(56) Entgegenhaltungen:
- DE-A1- 102008 045 816
- DE-A1- 102021 102 037
- DE-A1- 3 345 770
- DE-B3- 102010 006 705
- DE-C2- 2 849 326

## Beschreibung

Die Offenbarung betrifft eine elektrische Durchführungsanordnung für eine Brennstoff- und/oder eine Elektrolysezellenanordnung. Die Offenbarung betrifft weiterhin eine Brennstoff- und/oder eine Elektrolysezellenanordnung, insbesondere eine Brennstoff- und/oder eine Elektrolysezellenanordnug, die eine hier beschriebene Durchführungsanordnung aufweist.

Elektrolyseure, wie beispielsweise Hochtemperatur-Wasserdampf-Elektrolyseure (SOEC), werden beispielsweise mit Wasserdampf betrieben, der mit Hilfe von Elektroenergie in Wasserstoff und Sauerstoff zerlegt wird. Im Brennstoffzellenbetrieb ist es möglich, aus Wasserstoff und Luft Elektroenergie zu gewinnen.

DE 10 2021 102037 A1 betrifft eine elektrische Durchführung umfassend einen Grundkörper mit zumindest einer durch den Grundkörper verlaufenden Durchgangsöffnung, ein Isolationsmaterial welches in der durch den Grundkörper verlaufenden Durchgangsöffnung aufgenommen ist, zumindest einen elektrischen Leiter welcher sich durch das in der Durchgangsöffnung aufgenommen Isolationsmaterials hindurch erstreckt und mit einem Teilabschnitt aus dem Isolationsmaterial herausragt, zumindest eine Kriechstreckenverlängerung, welche den herausragenden Teilabschnitt des elektrischen Leiters zumindest bereichsweise umgibt, und ein Dichtungselement, welches zwischen dem Isolationsmaterial und der Kriechstreckenverlängerung angeordnet ist, wobei das Material des Dichtungselements zumindest teilweise mineralisch und kristallin ausgebildet ist.

Es ist wünschenswert, eine elektrische Durchführungsanordnung für eine Brennstoff- und/oder eine Elektrolysezellenanordnung anzugeben, die einen verlässlichen Betrieb ermöglicht. Es ist zudem wünschenswert, eine Brennstoff- und/oder eine Elektrolysezellenanordnung anzugeben, die verlässlich betreibbar ist.

Ausführungsformen der Offenbarung betreffen eine elektrische Durchführungsanordnung für einen Brennstoff- und/oder eine Elektrolysezellenanordnung. Weitere Ausführungsformen der Offenbarung betreffen eine Brennstoff- und/oder eine Elektrolysezellenanordnung, insbesondere mit einer elektrischen Durchführungsanordnung gemäß einer der hier beschriebenen Ausführungsformen.

Die elektrische Durchführungsanordnung weist eine Leitungsvorrichtung auf. Die Leitungsvorrichtung weist einen elektrisch leitfähigen Leiter auf. Der elektrisch leitfähige Leiter ist länglich entlang einer Längsrichtung ausgedehnt. Der Leiter weist ein elektrisch leitfähiges Material auf, insbesondere ein elektrisch leitfähiges Metall, beispielsweise Kupfer. Die Leitungsvorrichtung weist einen elektrischen Isolator auf. Der elektrische Isolator umgibt den Leiter in einem Mittelabschnitt des Leiters. Der Leiter ist in dem Mittelabschnitt mittels des Isolators elektrisch isoliert.

Die Durchführungsanordnung weist eine Montagebuchse mit einer Ausnehmung auf. Beispielsweise ist die Montagebuchse aus einem Metall gebildet, beispielweise aus Edelstahl.

Die Leitungsvorrichtung ist in der Ausnehmung anordenbar. Die Leitungsvorrichtung ist so in der Montagebuchse anordenbar, dass sich die Leitungsvorrichtung durch die Montagebuchse hindurch erstreckt.

Die Durchführungsanordnung weist ein Befestigungselement auf.

Das Befestigungselement ist ausgebildet, die Leitungsvorrichtung relativ zu der Montagebuchse zu fixieren. Beispielsweise ist das Befestigungselement aus einem Metall gebildet, beispielweise aus Edelstahl.

Die Montagebuchse umgibt die Ausnehmung mit einer Innenwand. Die Innenwand ist entlang der Längsrichtung schräg verlaufend ausgerichtet.

Der Isolator weist einen radialen Vorsprung auf. Der radiale Vorsprung weist eine Seitenwand auf, die entlang der Längsrichtung schräg verlaufend ausgerichtet ist.

Die Seitenwand und die Innenwand sind in einem montierten Zustand der Durchführungsanordnung in direktem Kontakt miteinander. In dem montierten Zustand, in dem die Leitungsvorrichtung in der Ausnehmung der Montagebuchse angeordnet ist, sind die Innenwand und die Seitenwand in Kontakt miteinander. Im montierten Zustand berühren sich die Innenwand und die Seitenwand.

Mittels der schräg verlaufenden Innenwand und der schräg verlaufenden Seitenwand, die sich im montierten Zustand kontaktieren, ist eine verlässliche Abdichtung gegenüber Fluiden zwischen der Montagebuchse und der Leitungsvorrichtung möglich.

Die elektrische Durchführungsanordnung ermöglicht eine Durchleitung von elektrischem Strom mittels des Leiters, beispielsweise durch eine Gehäusewand hindurch. Die Durchführungsanordnung ist dabei gasdicht und elektrisch isolierend gegenüber der Gehäusewand ausbildbar. Die Gasdichtheit und die elektrische Isolierung ist mittels des Isolators mit dem radialen Vorsprung und der korrespondierend ausgebildeten Montagebuchse realisiert.

Die Durchführungsanordnung ist kostengünstig herstellbar. Die Bauteile der Durchführungsanordnung können aus separaten Einzelteilen bereitgestellt werden, sodass die Durchführungsanordnung als Modulsystem bereitstellbar ist, um auf verschiedene abzudichtende Fluide oder elektrische Eigenschaften angepasst werden zu können. Die Abdichtung zwischen dem Isolator und der Montagebuchse wird mittels Anpressens des radialen Vorsprungs gegen die Innenwand realisiert.

Gemäß einer Ausführungsform weisen die Seitenwand und die Innenwand jeweils eine Pyramidenstumpfform auf. Gemäß einer Ausführungsform weisen die Seitenwand und die Innenwand jeweils eine Kegelstumpfform auf. Auch andere korrespondierende Formen, die schräg verlaufende Seiten- und Innenwände aufweisen, sind möglich. Insbesondere sind die Seitenwand und die Innenwand mit korrespondierenden Formen ausgebildet. Die Seitenwand des Vorsprungs ist so ausgewählt, dass sie sich verjüngt. Die Innenwand umgibt die Ausnehmung so, dass sich diese korrespondierend verjüngt. Somit ist der Vorsprung einfach in die Ausnehmung einbringbar und beispielsweise selbstzentrierend. Ein Kontakt entlang des gesamten Umfangs der Seitenwand und der Innenwand ist realisiert, um ein verlässliches Abdichten gegenüber Fluiden zu ermöglichen.

Gemäß einer Ausführungsform wirkt das Befestigungselement im montierten Zustand eine Kraft auf den Vorsprung aus. Die Kraft drückt die Seitenwand gegen die Innenwand. Somit ist ein verlässliches und dauerhaftes Kontaktieren der Seitenwand und der Innenwand miteinander realisierbar. Insbesondere wird die Kraft in Abhängigkeit eines Materials des Isolators vorgegeben, sodass sich der Vorsprung durch die Kraft nicht unerwünscht verformt und insbesondere ein Materialfließen vermieden wird. Beispielsweise ist ein Befestigungsdrehmoment für das Befestigungselement von weniger als 10 Nm ausreichend, beispielsweise weniger als 9 Nm, beispielsweise 8 Nm oder weniger.

Gemäß einer Ausführungsform weist der Vorsprung eine Querseite auf. Die Querseite verläuft radial zu der Längsrichtung. Ausgehend von der Querseite verjüngt sich der Vorsprung. Das Befestigungselement ist im montierten Zustand in direktem Kontakt mit der Querseite. Beispielsweise wirkt das Befestigungselement die Kraft auf die Querseite auf. Somit wird der Isolator in eine Richtung weg von der Querseite, in die sich der Vorsprung verjüngt, gegen die Innenwand gedrückt.

Gemäß einer Ausführungsform ist der Vorsprung an dem Isolator ortsfest ausgebildet. Der Vorsprung ist relativ zu dem übrigen Isolator unbeweglich. Der Isolator ist beispielsweise einstückig mit dem Vorsprung ausgebildet. Es ist auch möglich, den Vorsprung als separates Bauelement vorzusehen und mit dem übrigen Isolator zu verbinden, sodass der Vorsprung mit dem übrigen Isolator fixiert ist. Beispielsweise wird hierzu eine Klebeverbindung oder eine andere Verbindung verwendet.

Gemäß zumindest einer Ausführungsform weist der Isolator außerhalb des Vorsprungs eine Wanddicke im Bereich von 1 mm bis 5 mm auf. Die Wanddicke ist vorgegeben, um eine ausreichende elektrische Isolierung zwischen dem elektrischen Leiter und der Montagebuchse zu realisieren. Zudem werden ausreichende Kriechstrecken realisiert und/oder eine ausreichende Durchschlagsfestigkeit gewährleistet. Insbesondere steht der Isolator im montierten Zustand entlang der Längsrichtung über die Montagebuchse in beide Richtungen vor, um die Ausbildung von Kriechstrecken auf der Oberfläche des Isolators zu vermeiden.

Gemäß zumindest einer Ausführungsform weist der Isolator ein Thermoplast auf. Alternativ ist der Isolator aus einem Thermoplast gebildet. Beispielsweise ist der Thermoplast Polyetheretherketon (PEEK). Beispielsweise ist der Isolator aus PEEK gebildet oder weist als hauptsächlichen Bestandteil PEEK auf. Die Erfinder dieser Offenbarung haben herausgefunden, dass PEEK sich besonders als Material für den Isolator für die Durchführung bei der Brennstoff- und/oder Elektrolysezellenanordnung eignet. Die Erfinder dieser Offenbarung haben herausgefunden, dass die Eigenschaften von PEEK eine langlebige Gasdichtigkeit auch bei den im Betrieb der Brennstoff- und/oder Elektrolysezellenanordnung auftretenden Temperaturen und Drücken ermöglichen. Insbesondere haben die Erfinder dieser Offenbarung herausgefunden, dass PEEK auch bei einem Sauerstoffgehalt von bis zu 100 % eine verlässliche Fluidabdichtung ermöglicht.

Gemäß weiteren Ausführungsformen wird ein anderer Thermoplast für den Isolator verwendet. Der andere Thermoplast ist insbesondere ausgebildet, bei den im Betrieb auftretenden Temperaturen und Sauerstoffgehalten eine ausreichende Fluidisolierung zu ermöglichen über einen ausreichend langen Betriebszeitraum.

Eine Brennstoff- und/oder Elektrolysezellenanordnung, die im Folgenden auch als Anordnung bezeichnet wird, weist ein Gehäuse mit einer Gehäusewand auf. Die Gehäusewand weist eine Aussparung auf.

Die Anordnung weist eine Durchführungsanordnung gemäß einer der hier beschriebenen Ausführungsformen auf. Die Durchführungsanordnung ist mit der Gehäusewand gekoppelt. Die Leitungsvorrichtung ist mit der Montagebuchse gekoppelt. Die Kopplungen sind derart ausgebildet, dass sich die Leitungsvorrichtung durch die Aussparung hindurch erstreckt.

Beispielsweise ist die Montagebuchse mittels einer Schweißverbindung und/oder einer Schraubverbindung an der Gehäusewand befestigt. Beispielsweise ist die Montagebuchse in die Ausnehmung eingesteckt und mittels einer Mutter verschraubt und somit befestigt. Beispielsweise ist die Montagebuchse unmittelbar an der Gehäusewand befestigt. Die Leitungsvorrichtung ist beispielsweise an der Montagebuchse fixiert. Somit ist die Leitungsvorrichtung mittels der Montagebuchse an der Gehäusewand befestigt.

Die Durchführungsanordnung stellt eine gasdichte elektrische Durchführung durch die Gehäusewand zur Verfügung. Somit ist es möglich, elektrische Energie mittels des Leiters durch die Gehäusewand hindurch ins Innere des Gehäuses oder aus dem Inneren des Gehäuses nach außen zu leiten. Der Leiter ist mittels des Isolators sowohl gegenüber dem Gehäuse elektrisch isoliert angeordnet als auch gasdicht beziehungsweise fluiddicht abgedichtet.

Die Ausnehmung ist zwischen der Gehäusewand und dem Leiter mittels der Montagebuchse und mittels des Isolators fluiddicht verschlossen, insbesondere in einem Temperaturbereich innerhalb des Gehäuses zwischen 80 °C und 200 °C. Alternativ oder zusätzlich ist die Ausnehmung fluiddicht verschlossen bei einem Sauerstoffgehalt innerhalb des Gehäuses von bis zu 100 %. Der Isolator ist ausgebildet, mittels des Kontakts zwischen dem Vorsprung und der Innenwand die fluiddichte Isolation auch bei den beschriebenen Temperaturen und Sauerstoffgehältern zu ermöglichen. Zudem ist der Isolator ausgebildet, den Leiter und das Gehäuse elektrisch voneinander zu isolieren. Insbesondere bei einer Hochtemperatur-Wasserdampf-Elektrolyse treten die beschriebenen Temperaturen und Sauerstoffgehälter innerhalb des Gehäuses auf. Das Gehäuse ist beispielsweise das Gehäuse eines Elektrolyseurs und/oder einer Brennstoffzellenanordnung. Im Inneren des Gehäuses sind beispielsweise die Elektrolysezellen und/oder die Brennstoffzellen angeordnet.

Weitere Vorteile, Merkmale und Weiterbildungen ergeben sich aus den nachfolgenden, in Verbindung mit den Figuren erläuterten Beispielen. Gleiche, gleichartige und gleich wirkende Elemente können figurenübergreifend mit den gleichen Bezugszeichen versehen sein.

Es zeigen:
Figur 1 eine schematische Darstellung eines Teils einer Anordnung gemäß einem Ausführungsbeispiel, und
Figuren 2 bis 4 jeweils schematische Darstellungen einer Durchführungsanordnung gemäß einem Ausführungsbeispiel.

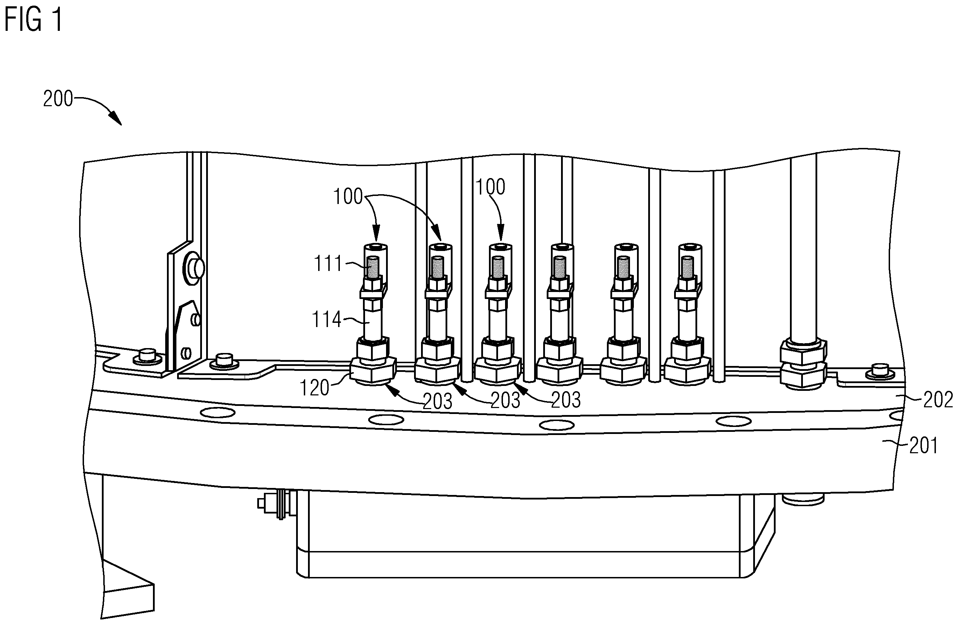

Figur 1 zeigt eine schematische Darstellung eines Teils einer Brennstoffzellenanordnung 200. Die Anordnung 200 kann auch eine Elektrolysezellenanordnung 200 sein. Insbesondere ist es möglich, mittels der Anordnung 200 bei hohen Temperaturen von bis zu 200 °C und Wasserdampf, Sauerstoff und Wasserstoff zu erzeugen oder aus Wasserstoff und Luft elektrische Energie zu gewinnen.

Die Anordnung 200 weist ein Gehäuse 201 auf. Das Gehäuse 201 ist beispielsweise gasfluiddicht und insbesondere gasdicht ausgebildet. Im Inneren des Gehäuses 201 sind die Elektrolysezellen und/oder Brennstoffzellen angeordnet. Das Gehäuse 201 weist eine Gehäusewand 202 auf, die den Innenraum des Gehäuses umgibt. Die Gehäusewand 202 ist beispielsweise aus einem Metallblech oder ähnlichem gebildet. Die Gehäusewand 220 weist eine Aussparung 203 oder mehrere Aussparungen 203 auf. Die Aussparung 203 stellt jeweils eine Verbindung durch die Gehäusewand 202 dar, insbesondere von außerhalb der Gehäusewand 202 in den Innenraum des Gehäuses 201. Die Aussparung 203 ist beispielsweise als Loch in der Gehäusewand 202 ausgebildet.

Die Anordnung 200 weist eine Durchführungsanordnung 100 oder eine Mehrzahl von Durchführungsanordnungen 100 auf. Die Durchführungsanordnungen 100 sind insbesondere gleichartig aufgebaut, so dass im Folgenden eine Durchführungsanordnung 100 beschrieben wird.

Die Durchführungsanordnung 100 ist in der Aussparung 203 angeordnet. Die Durchführungsanordnung 100 erstreckt sich somit durch die Gehäusewand 202 hindurch, insbesondere von außerhalb des Gehäuses 201 in den Innenraum des Gehäuses 201. Beispielsweise dient die Durchführungsanordnung als elektrische Durchführungsanordnung zum elektrischen Kontaktieren der Elektrolysezellen und/oder der Brennstoffzellen. Mittels der Durchführungsanordnung 100 ist eine elektrisch isolierte und fluiddichte elektrische Kontaktierung der Brennstoff- und/oder Elektrolysezellen in dem Gehäuse 201 durch die Gehäusewand 202 hindurch möglich. Dabei ist die Gehäusewand 202 elektrisch von einem Leiter 111 der Durchführungsanordnung 100 isoliert. Zudem schließt die Durchführungsanordnung 100 die Aussparung 203 fluiddicht ab, so dass ein Fluiddurchtritt durch die Aussparung 203 hindurch blockiert ist. Insbesondere ist die Aussparung 203 mittels der Durchführungsanordnung 100 gasdicht verschlossen.

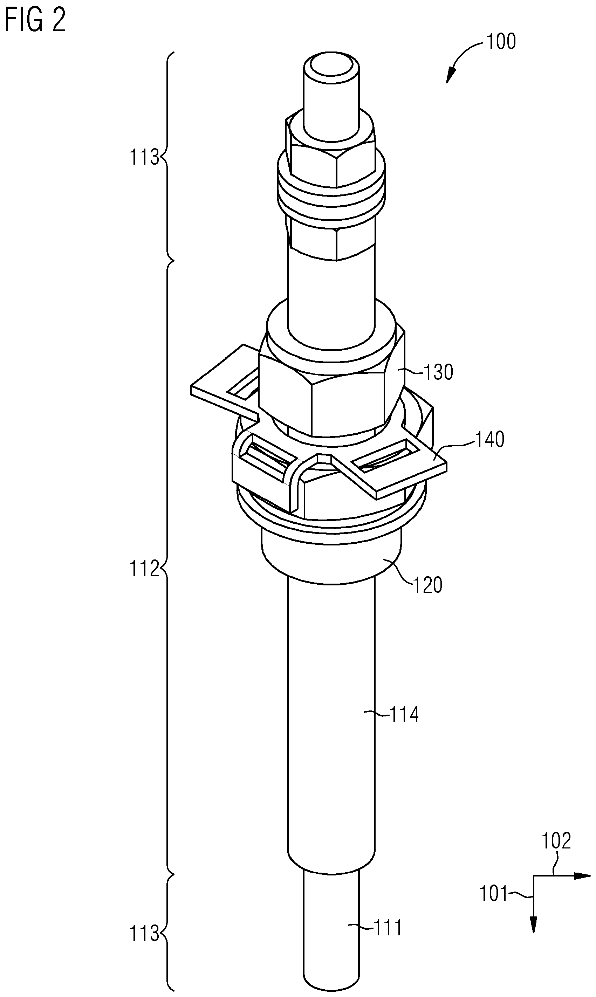

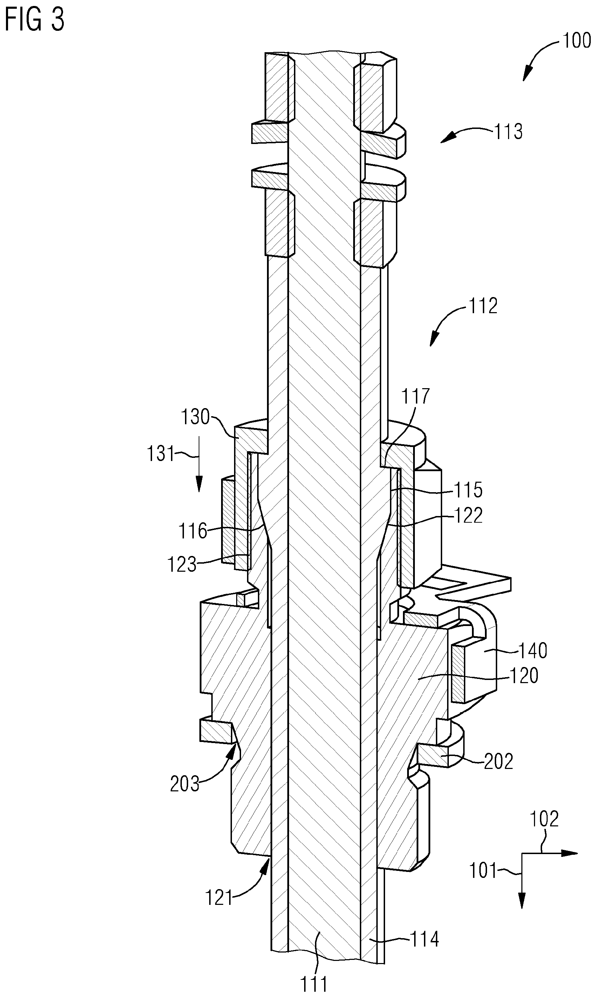

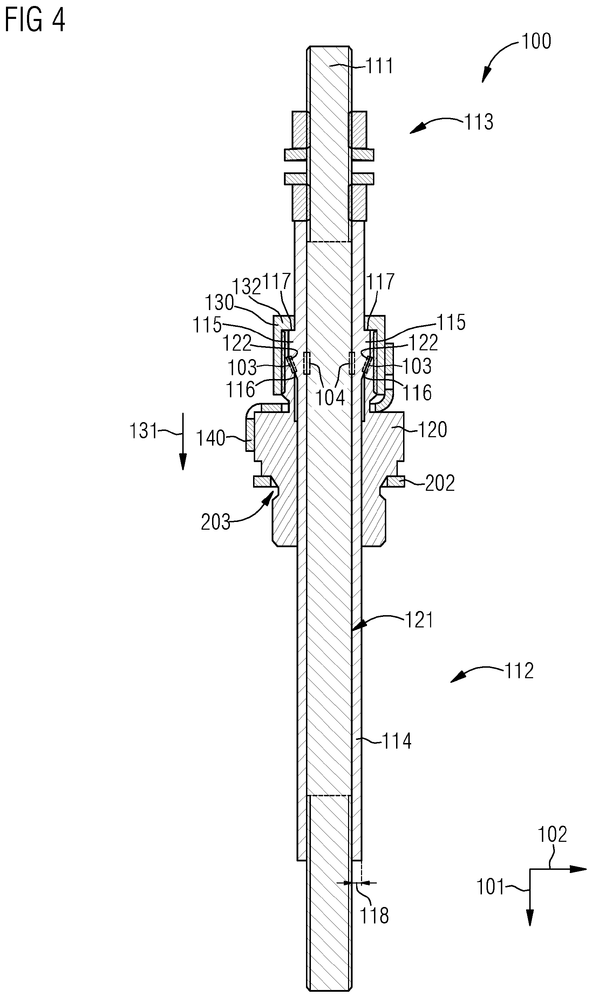

Wie in den Figuren 2 bis 4 schematisch und exemplarisch dargestellt, erstreckt sich der Leiter 111 der Durchführungsanordnung 100 entlang einer Längsrichtung 101. Insbesondere ist der Leiter 111 entlang der Längsrichtung 101 deutlich länger ausgedehnt als entlang einer Querrichtung 102. Die Querrichtung 102 und die Längsrichtung 101 stehen insbesondere senkrecht aufeinander.

Der Leiter 111 ist beispielsweise aus einem Metall wie Kupfer oder einem anderen elektrisch leitfähigen Material gebildet.

Die Durchführungsanordnung 100 weist einen Isolator 114 auf. Der Isolator 114 ist aus einem hochohmigen, elektrisch isolierenden Material gebildet. Insbesondere weist der Isolator 114 ein Thermoplast auf oder ist aus einem Thermoplast gebildet. Der Isolator 114 ist beispielsweise aus Polyetheretherketon (PEEK) oder einem anderen Thermoplast gebildet.

Der Isolator 114 ist ausgebildet, eine elektrische Isolierung des Leiters 111 zu realisieren und eine gasdichte Abdichtung der Aussparung 203 zu realisieren.

Der Isolator 114 umgibt den Leiter 111 in einem Mittelabschnitt 112. Der Mittelabschnitt 112 ist entlang der Längsrichtung 101 zwischen zwei jeweiligen Endabschnitten 113 des Leiters 111 angeordnet. In den jeweiligen Endabschnitten 113 ist der Leiter 111 frei von dem Isolator 114. Somit ist der Leiter 111 in den jeweiligen Endabschnitten 113 elektrisch kontaktierbar, beispielsweise mittels einer Klemm- und/oder einer Lötverbindung mit weiteren, nicht explizit dargestellten elektrisch leitfähigen Leitern. Der Mittelabschnitt 112 umfasst insbesondere eine Mitte des Leiters 111 entlang der Längsrichtung 101 und erstreckt sich beispielsweise ausgehend von der Mitte über mehr als 50 % des Leiters 111. Axial ist der Leiter 111 somit nicht vollständig von dem Isolator 114 bedeckt. Der Isolator 114 bedeckt den Leiter 111 in dem Mittelabschnitt 112 und in den axialen Endabschnitten 113 nicht. Radial umgibt der Isolator 114 den Leiter 111 in dem Mittelabschnitt 112 vollständig. Somit ist der Leiter 111 radial im Mittelbereich 112 mittels des Isolators 114 vollständig elektrisch isoliert.

Der Leiter 111 und der Isolator 114 sind Teil einer Leitungsvorrichtung. Die Leitungsvorrichtung der Durchführungsanordnung 100 weist den Leiter 111 und den Isolator 114 auf.

Die Durchführungsanordnung 100 weist eine Montagebuchse 120 auf. Die Montagebuchse dient zum Befestigen der Durchführungsanordnung 100 an der Gehäusewand 202. Beispielsweise ist die Montagebuchse 120 in der Aussparung 203 anordenbar. Im montierten Zustand ist die Montagebuchse 120 in der Aussparung 203 angeordnet, so dass die Montagebuchse 120 die Gehäusewand 202 entlang der Längsrichtung 101 durchdringt. Die Montagebuchse 120 ist an der Gehäusewand 202 fixiert. Beispielsweise ist die Montagebuchse 120 mittels einer Schweißverbindung an der Gehäusewand 202 befestigt. Es ist auch möglich, dass die Montagebuchse 120 mittels einer Schraubverbindung, beispielsweise mit einer Mutter, an der Gehäusewand 202 befestigt ist.

Die Montagebuchse 120 umgibt eine Ausnehmung 121. Die Ausnehmung 121 erstreckt sich entlang der Längsrichtung 101 durch die Montagebuchse 120 hindurch. Der Leiter 111 ist in der Ausnehmung 121 angeordnet. Der Leiter 111 erstreckt sich in der Ausnehmung 121 durch die Montagebuchse 120 hindurch.

Radial ist der Isolator 114 zwischen dem Leiter 111 und der Montagebuchse 120 angeordnet. Somit sind der Leiter 111 und die Montagebuchse 120 elektrisch voneinander isoliert.

Die Ausnehmung 121 ist von einer Innenwand 122 der Montagebuchse 120 umgeben. Die Innenwand 122 ist radial dem Leiter 111 zugewandt.

Die Innenwand 122 weist einen schrägen Verlauf auf. Die Innenwand 122 weist abschnittsweise einen trichterförmigen Verlauf auf. Die Innenwand 122 verjüngt sich abschnittsweise in Richtung hin zur Gehäusewand 202 entlang der Längsrichtung 101. Die Innenwand 122 ist abschnittsweise kegelstumpfförmig oder pyramidenstumpfförmig ausgebildet. Die Innenwand 122 umgibt die Ausnehmung 121 so, dass an einem der Gehäusewand 202 abgewandten Ende die Ausnehmung 121 einen größere Ausdehnung entlang der Querrichtung 102 aufweist als an einem der Gehäusewand 202 zugewandten Teil.

Der Isolator 114 weist einen radialen Vorsprung 115 auf. Der radiale Vorsprung 115 ist insbesondere ringförmig ausgebildet und springt entlang des gesamten Umfangs des Isolators 114 radial vor. Der Vorsprung 115 ist mit einer zu dem schrägen Abschnitt der Innenwand 122 korrespondierenden Form ausgebildet. Insbesondere weist der Vorsprung 115 eine Seitenwand 116 auf. Die Seitenwand 116 verläuft schräg geneigt entlang der Längsrichtung 101. Die Seitenwand 116 verjüngt sich abschnittsweise ausgehend von einer Querseite 117 hin zu der Gehäusewand 202. Die Querseite 117 ist insbesondere der Gehäusewand 202 abgewandt und erstreckt sich entlang der Querrichtung 102. Die Seitenwand 116 ist insbesondere korrespondierend zu dem Abschnitt der Innenwand 122 kegelstumpfförmig oder pyramidenstumpfförmig ausgebildet.

Die Leitungsvorrichtung ist mittels eines Befestigungselements 130 an der Montagebuchse 120 befestigt. Das Befestigungselement 130 ist beispielsweise eine Überwurfmutter oder ein anderes Element, das eine Kraft 131 auf die Leitungsvorrichtung und insbesondere auf die Querseite 117 des Vorsprungs 115 auswirken kann. Das Befestigungselement 130 weist beispielsweise einen Flansch 132 auf. Der Flansch 132 ist beispielsweise in direktem Kontakt mit der Querseite 117. Der Flansch 132 spring entlang der Querrichtung 132 in Richtung hin zu dem Leiter 111 vor. Beispielsweise wird das Befestigungselement 130 auf ein Gewinde der Montagebuchse 120 aufgeschraubt, so dass eine Schraubverbindung 123 zwischen dem Befestigungselement 130 und der Montagebuchse 120 ausgebildet ist. Diese Schraubverbindung 123 fixiert die Leitungsvorrichtung und die Montagebuchse 120 relativ zueinander.

Das Befestigungselement 130 wirkt die Kraft 131 auf die Leitungsvorrichtung aus, so dass der Isolator 114 gegen die Innenwand 122 der Montagebuchse 120 gedrückt wird. Die Seitenwand 116 des Vorsprungs 115 und die Innenwand 122 sind dadurch zumindest abschnittsweise jedoch entlang des Umfangs einmal vollständig miteinander in Kontakt. Somit ist eine fluiddichte Anordnung der Leitungsvorrichtung in der Ausnehmung 121 realisiert.

An dem Kontakt zwischen dem Isolator 115 und der Montagebuchse 120 ist ein Dichtbereich 103 ausgebildet, der fluiddicht ist. Aufgrund der sich verjüngenden Form des Vorsprungs 115 und der korrespondierenden Ausnehmung 121 wird der Vorsprung 115 mittels der Kraft 131 verlässlich abschließend gegen die Innenwand 122 der Montagebuchse 120 gedrückt. Zudem wirkt hierbei eine Kraft entlang der Querrichtung 102, so dass auch an einem weiteren Dichtbereich 104 zwischen dem Leiter 111 und dem Isolator 114 eine fluide Abdichtung verlässlich realisiert ist. Beispielsweise weisen der Dichtbereich 103 und der weitere Dichtbereich 104 jeweils eine Ring-Form auf. Insbesondere sind der Dichtbereich 103 und der weitere Dichtbereich konzentrisch um den Leiter 111 angeordnet.

Das Befestigungselement 130 wird mit einer vorgegebenen Kraft auf die Montagebuchse 120 aufgeschraubt, die ein verlässliches Abdichten des Isolators 114 an der Innenwand 122 ermöglicht und dabei ein unerwünschtes zu starkes Verformen und/oder einen unerwünschten Materialfluss an dem Vorsprung 115 vermeidet. Die unerwünschte Verformung und/oder das Materialfließen können über die gesamte Lebensdauer zu einer unausreichenden Dichtheit oder zu einer Leckage führen. Dies wird aufgrund der definierten Kraft zum Befestigen des Befestigungselements 130 vermieden. Beispielsweise wird das Befestigungselement mit einem Drehmoment von maximal 15 Nm, maximal 12 Nm, maximal 10 Nm oder weniger befestigt. Beispielsweise wird das Befestigungselement 130 mit einem Drehmoment von mindestens 3 Nm, mindestens 5 Nm oder mindestens 7 Nm befestigt. Beispielsweise wird das Befestigungselement 130 mit einem Drehmoment von 8 Nm +/- 20 % befestigt. Die darauf resultierende Kraft 131 drückt den Vorsprung 115 ausreichend stark gegen die Innenwand 122, um eine verlässliche fluiddichte Abdichtung zu realisieren und dabei ein unerwünschtes Materialfließen zu vermeiden.

Der Vorsprung 115 springt an der Querseite 117 beispielsweise in einem Bereich zwischen 0,5 und 5 mm vor. Außerhalb des Vorsprungs 115 weist der Isolator 114 beispielsweise eine Wanddicke 118 zwischen 1 mm und 5 mm auf. Die Wanddicke 118 ist insbesondere in Abhängigkeit der im Betrieb auftretenden elektrischen Ströme, Temperaturen und Gaskonzentrationen vorgegeben. Wieweit der Vorsprung 115 an der Wanddicke der Querseite 117 entlang der Querrichtung 102 vorspringt, ist insbesondere von dem zur Verfügung stehenden Bauraum der Montagebuchse 120 und/oder einer notwendigen Kontaktfläche zwischen der Querseite 117 und dem Befestigungselement 130 zum Auswirken der Kraft 131 vorgegeben.

Eine Verdrehsicherung 140 ist vorgesehen, um das Befestigungselement 130 und die Montagebuchse 120 relativ zueinander ortsfest zu halten. Somit ist die gewünschte Kraft 131 auch über die längere Lebensdauer der Durchführungsanordnung 100 verlässlich haltbar. Ein Verdrehen des Befestigungselements 130 relativ zu der Montagebuchse 120 wird mittels der Verdrehsicherung 140 blockiert.

Während des Betriebs werden mittels des Leiters 111 beispielsweise elektrische Ströme mit 150 A und 1500 V geleitet. In dem Gehäuse 201 herrscht beispielsweise eine 100%ige Sauerstoffkonzentration bei 0,5 bar Druck. Die Durchführungsanordnung 100 mit dem Isolator 114 aus dem Thermoplast und dem Vorsprung 115 sowie der korrespondierenden Montagebuchse 120 ermöglicht bei diesen Betriebsbedingungen ein verlässliches Abdichten gegenüber Fluiden sowie eine verlässliche elektrische Isolierung. Dabei ist die Durchführungsanordnung 100 kostengünstig. Dadurch, dass die Montagebuchse 120 sowie die Leitungsvorrichtung und beispielsweise auch der Isolator 114 sowie das Befestigungselement 130 zunächst als separate Einzelteile zur Verfügung gestellt werden können, ist die Durchführungsanordnung 100 modulartig konfektionierbar, so dass die Durchführungsanordnung 100 einfach und verlässlich auf verschiedene abzudichtende Fluide und/oder elektrische Eigenschaften anpassbar ist.

Der Leiter 111 ist beispielsweise ein vernickelter Kupferbolzen. Der Isolator 114 ist beispielsweise aus einem Polyetheretherketon-Kunststoff gebildet. Die Montagebuchse 120 ist beispielsweise ein Standardedelstahlteil. Das Befestigungselement 130 ist beispielsweise ein Standardedelstahlteil.

Der Thermoplast, insbesondere das Material Polyetheretherketon, des Isolators 114 ermöglicht die verlässliche elektrisch isolierende Wirkung des Isolators 114. Polyetheretherketon weist sehr gute elektrisch isolierende Eigenschaften auf. Die Wandstärke 118 ist derart gestaltet, dass eine ausreichende Durchschlagsfestigkeit gewährleistet ist. Der Isolator 114 erstreckt sich in dem Mittelabschnitt 112 entlang der Längsrichtung 101 länger als die Ausdehnung der Montagebuchse 120 entlang der Längsrichtung 101 ist. Somit ist die Ausbildung von Kriechstrecken zwischen den jeweiligen Endabschnitten 113 und der Montagebuchse 120 vermieden.

Zur Gasabdichtung zwischen der Leitungsvorrichtung und der Montagebuchse 120 ist der Vorsprung 115 am Isolator 114 ausgebildet. Dessen konische Form, die in den konischen Sitz der Innenwand 122 in der Ausnehmung 121 angeordnet ist, erzielt den Dichtbereich 103 zwischen der Innenwand 122 und der Seitenwand 116 sowie den Dichtbereich 104 zwischen dem Isolator 114 und dem Leiter 111. Insbesondere werden diese Dichtwirkungen an dem Dichtbereich 103 und dem Dichtbereich 104 erzielt, indem das Befestigungselement 130 den Vorsprung 115 gegen die Innenwand 122 presst. Beispielsweise kommt es also so zu einer leichten Verformung des Isolators 114 an dem Vorsprung 115 und somit zu einer Ausbildung einer Flächenpressung des Isolators 114 auf die angrenzenden metallischen Bauteile, insbesondere auf den Leiter 111 und die Montagebuchse 120. Die so montierte Durchführungsanordnung 100 ist dann mittels einer Schweißverbindung und/oder einer Schraubverbindung an der Gehäusewand 202 befestigbar. Es ist möglich, dass die Durchführungsanordnung 100 so an der Gehäusewand 202 befestigt wird, dass das Befestigungselement 130 im Inneren des Gehäuses 201 angeordnet ist. Es ist auch möglich, dass die Durchführungsanordnung 100 so an der Gehäusewand 202 befestigt ist, dass das Befestigungselement 130 nach außen gerichtet am Gehäuse 201 angeordnet ist und somit von außerhalb des Gehäuses 201 zugänglich ist.

Die Durchführungsanordnung 100 ermöglicht eine kostengünstige und verlässliche Fluidabdichtung und elektrische Isolierung auch bei während der Elektrolyse auftretenden Gaskonzentrationen, Temperaturen und Drücken.

### Bezugszeichen

100 Durchführungsanordnung
101 Längsrichtung
102 Querrichtung
103 Dichtbereich
104 weitere Dichtbereiche
110 Leitungsvorrichtung
111 Leiter
112 Mittelabschnitt
113 Endabschnitt
114 Isolator
115 Vorsprung
116 Seitenwand
117 Querseite
118 Wanddicke
120 Montagebuchse
121 Ausnehmung
122 Innenwand
123 Schraubverbindung
130 Befestigungselement
131 Kraft
132 Flansch
140 Verdrehsicherung
200 Brennstoff- und/oder eine Elektrolysezellenanordnung
201 Gehäuse
202 Gehäusewand
203 Aussparung

## Patentansprüche

1. Elektrische Durchführungsanordnung (100) für eine Brennstoff- und/oder eine Elektrolysezellenanordnung (200), aufweisend:
- eine Leitungsvorrichtung mit einem elektrisch leitfähigen Leiter (111), der länglich entlang einer Längsrichtung (101) ausgedehnt ist, und einem elektrischen Isolator (114), der den Leiter (111) in einem Mittelabschnitt (112) umgibt, um den Leiter (111) elektrisch zu isolieren,
- eine Montagebuchse (120) mit einer Ausnehmung (121), wobei die Leitungsvorrichtung in der Ausnehmung (121) anordenbar ist, sodass sich die Leitungsvorrichtung durch die Montagebuchse (120) hindurch erstreckt,
- ein Befestigungselement (130), um die Leitungsvorrichtung relativ zu der Montagebuchse (120) zu fixieren,
**dadurch gekennzeichnet, dass** die Montagebuchse (120) die Ausnehmung (121) mit einer Innenwand (122) umgibt, die entlang der Längsrichtung (101) schräg verlaufend ausgerichtet ist, und wobei der Isolator (114) einen radialen Vorsprung (115) aufweist, der eine Seitenwand (116) aufweist, die entlang der Längsrichtung (101) schräg verlaufend ausgerichtet ist, wobei die Seitenwand (116) und die Innenwand (122) in einem montierten Zustand der Durchführungsanordnung (100) in direktem Kontakt miteinander sind.

2. Durchführungsanordnung gemäß dem vorhergehenden Anspruch, bei der die Seitenwand (116) und die Innenwand (122) jeweils pyramidenstumpf-förmig oder kegelstumpf-förmig ausgebildet sind.

3. Durchführungsanordnung gemäß einem der vorhergehenden Ansprüche, bei der das Befestigungselement (130) im montierten Zustand eine Kraft (131) auf den Vorsprung (115) auswirkt, die die Seitenwand (116) gegen die Innenwand (122) drückt.

4. Durchführungsanordnung gemäß einem der vorhergehenden Ansprüche, bei der der Vorsprung (115) eine Querseite (117) aufweist, die radial zu der Längsrichtung (101) verläuft und von der aus sich der Vorsprung (115) verjüngt, wobei das Befestigungselement (130) im montierten Zustand in direktem Kontakt mit der Querseite (117) ist.

5. Durchführungsanordnung gemäß einem der vorhergehenden Ansprüche, bei der Vorsprung (115) an dem Isolator (114) ortsfest ausgebildet ist.

6. Durchführungsanordnung gemäß einem der vorhergehenden Ansprüche, bei der der Isolator (114) außerhalb des Vorsprungs (115) eine Wanddicke (118) in Bereich von 1mm bis 5mm aufweist.

7. Durchführungsanordnung gemäß einem der vorhergehenden Ansprüche, bei der der Isolator (114) ein Thermoplast aufweist oder aus einem Thermoplast gebildet ist, wobei das Thermoplast insbesondere Polyetheretherketon ist.

8. Brennstoff- und/oder eine Elektrolysezellenanordnung (200), aufweisend:
- ein Gehäuse (201) mit einer Gehäusewand (202), die eine Aussparung (203) aufweist,
- eine Durchführungsanordnung (100) gemäß einem der vorhergehenden Ansprüche, wobei die Durchführungsanordnung (100) mit der Gehäusewand (202) gekoppelt ist, und wobei die Leitungsvorrichtung mit der Montagebuchse (120) gekoppelt ist, sodass sich die Leitungsvorrichtung durch die Aussparung (203) hindurch erstreckt.

9. Brennstoff- und/oder eine Elektrolysezellenanordnung gemäß dem vorhergehenden Anspruch, wobei die Montagebuchse (120) mittels einer Schweißverbindung und/oder einer Schraubverbindung an der Gehäusewand (202) befestigt ist.

10. Brennstoff- und/oder eine Elektrolysezellenanordnung gemäß Anspruch 8 oder 9, wobei der Isolator (114) die Ausnehmung (121) fluiddicht verschließt in einem Temperaturbereich innerhalb des Gehäuses (201) zwischen 80°C und 200°C und bei einem Sauerstoffgehalt innerhalb des Gehäuses (201) von bis zu 100%.

11. Brennstoff- und/oder eine Elektrolysezellenanordnung gemäß einem der Ansprüche 8 bis 10, wobei der Isolator (114) den Leiter (111) und die Montagebuchse (120) elektrisch voneinander isoliert in einem Temperaturbereich innerhalb des Gehäuses (201) zwischen 80°C und 200°C und bei einem Sauerstoffgehalt innerhalb des Gehäuses (201) von bis zu 100%.

## Claims

1. Electrical feedthrough assembly (100) for a fuel cell and/or electrolyser cell assembly (200), comprising:
- a conductor arrangement having an electrically conductive conductor (111) extending longitudinally along a longitudinal direction (101), and an electrical insulator (114) surrounding the conductor (111) in a central portion (112) in order to electrically insulate the conductor (111),
- a mounting socket (120) having a recess (121), wherein the conductor arrangement is arrangeable in the recess (121) such that the conductor arrangement extends through the mounting socket (120),
- a fastening element (130) for fixing the conductor arrangement relative to the mounting socket (120),
**characterized in that** the mounting socket (120) surrounds the recess (121) with an inner wall (122) aligned obliquely along the longitudinal direction (101), and wherein the insulator (114) comprises a radial projection (115) having a side wall (116) aligned obliquely along the longitudinal direction (101), the side wall (116) and the inner wall (122) being in direct contact with one another in an assembled state of the feedthrough assembly (100).

2. Feedthrough assembly according to the preceding claim, wherein the side wall (116) and the inner wall (122) are each formed in the shape of a truncated pyramid or a truncated cone.

3. Feedthrough assembly according to any one of the preceding claims, wherein the fastening element (130), in the assembled state, exerts a force (131) on the projection (115), which presses the side wall (116) against the inner wall (122).

4. Feedthrough assembly according to any one of the preceding claims, wherein the projection (115) comprises a transverse side (117) extending radially relative to the longitudinal direction (101) and from which the projection (115) tapers, the fastening element (130) being in direct contact with the transverse side (117) in the assembled state.

5. Feedthrough assembly according to any one of the preceding claims, wherein the projection (115) is fixedly formed on the insulator (114).

6. Feedthrough assembly according to any one of the preceding claims, wherein the insulator (114), outside the projection (115), has a wall thickness (118) in the range of 1 mm to 5 mm.

7. Feedthrough assembly according to any one of the preceding claims, wherein the insulator (114) comprises a thermoplastic material or is formed from a thermoplastic material, the thermoplastic material being in particular polyetheretherketone.

8. Fuel cell and/or electrolyser cell assembly (200), comprising:
- a housing (201) having a housing wall (202) provided with an opening (203),
- a feedthrough assembly (100) according to any one of the preceding claims,
wherein the feedthrough assembly (100) is coupled to the housing wall (202), and wherein the conductor arrangement is coupled to the mounting socket (120) such that the conductor arrangement extends through the opening (203).

9. Fuel cell and/or electrolyser cell assembly according to the preceding claim, wherein the mounting socket (120) is fastened to the housing wall (202) by means of a welded connection and/or a screwed connection.

10. Fuel cell and/or electrolyser cell assembly according to claim 8 or 9, wherein the insulator (114) fluid-tightly seals the recess (121) within a temperature range inside the housing (201) of between 80°C and 200°C and at an oxygen content inside the housing (201) of up to 100%.

11. Fuel cell and/or electrolyser cell assembly according to any one of claims 8 to 10, wherein the insulator (114) electrically insulates the conductor (111) and the mounting socket (120) from one another within a temperature range inside the housing (201) of between 80°C and 200°C and at an oxygen content inside the housing (201) of up to 100%.

## Revendications

1. Dispositif de traversée électrique (100) destiné à un ensemble de pile à combustible et/ou d'électrolyseur (200), comprenant :
- un dispositif de conduction comportant un conducteur électriquement conducteur (111), s'étendant longitudinalement selon une direction longitudinale (101), et un isolant électrique (114) entourant le conducteur (111) dans une section intermédiaire (112) afin d'isoler électriquement le conducteur (111),
- une douille de montage (120) comportant un évidement (121), le dispositif de conduction pouvant être disposé dans l'évidement (121) de sorte que le dispositif de conduction s'étende à travers la douille de montage (120),
- un élément de fixation (130) destiné à fixer le dispositif de conduction par rapport à la douille de montage (120),
**caractérisé en ce que** la douille de montage (120) entoure l'évidement (121) par une paroi intérieure (122) orientée de manière oblique selon la direction longitudinale (101), et **en ce que** l'isolant (114) comporte une saillie radiale (115) présentant une paroi latérale (116) orientée de manière oblique selon la direction longitudinale (101), la paroi latérale (116) et la paroi intérieure (122) étant en contact direct l'une avec l'autre dans un état assemblé du dispositif de traversée (100).

2. Dispositif de traversée selon la revendication précédente, dans lequel la paroi latérale (116) et la paroi intérieure (122) présentent chacune la forme d'un tronc de pyramide ou d'un tronc de cône.

3. Dispositif de traversée selon l'une quelconque des revendications précédentes, dans lequel l'élément de fixation (130), dans l'état assemblé, exerce une force (131) sur la saillie (115), laquelle presse la paroi latérale (116) contre la paroi intérieure (122).

4. Dispositif de traversée selon l'une quelconque des revendications précédentes, dans lequel la saillie (115) comporte une face transversale (117) s'étendant radialement par rapport à la direction longitudinale (101) et à partir de laquelle la saillie (115) se rétrécit, l'élément de fixation (130) étant en contact direct avec la face transversale (117) dans l'état assemblé.

5. Dispositif de traversée selon l'une quelconque des revendications précédentes, dans lequel la saillie (115) est réalisée de manière fixe sur l'isolant (114).

6. Dispositif de traversée selon l'une quelconque des revendications précédentes, dans lequel l'isolant (114), à l'extérieur de la saillie (115), présente une épaisseur de paroi (118) comprise entre 1 mm et 5 mm.

7. Dispositif de traversée selon l'une quelconque des revendications précédentes, dans lequel l'isolant (114) comprend un matériau thermoplastique ou est formé d'un matériau thermoplastique, le matériau thermoplastique étant notamment du polyétheréthercétone.

8. Ensemble de pile à combustible et/ou d'électrolyseur (200), comprenant :
- un boîtier (201) comportant une paroi de boîtier (202) présentant une ouverture (203),
- un dispositif de traversée (100) selon l'une quelconque des revendications précédentes,
dans lequel le dispositif de traversée (100) est couplé à la paroi de boîtier (202), et dans lequel le dispositif de conduction est couplé à la douille de montage (120) de sorte que le dispositif de conduction s'étende à travers l'ouverture (203).

9. Ensemble de pile à combustible et/ou d'électrolyseur selon la revendication précédente, dans lequel la douille de montage (120) est fixée à la paroi de boîtier (202) au moyen d'une liaison soudée et/ou d'une liaison vissée.

10. Ensemble de pile à combustible et/ou d'électrolyseur selon la revendication 8 ou 9, dans lequel l'isolant (114) assure une fermeture étanche aux fluides de l'évidement (121) dans une plage de températures à l'intérieur du boîtier (201) comprise entre 80°C et 200°C et pour une teneur en oxygène à l'intérieur du boîtier (201) allant jusqu'à 100 %.

11. Ensemble de pile à combustible et/ou d'électrolyseur selon l'une quelconque des revendications 8 à 10, dans lequel l'isolant (114) isole électriquement l'un de l'autre le conducteur (111) et la douille de montage (120) dans une plage de températures à l'intérieur du boîtier (201) comprise entre 80°C et 200°C et pour une teneur en oxygène à l'intérieur du boîtier (201) allant jusqu'à 100 %.
